# EUROPÄISCHE PATENTSCHRIFT

(11) **EP 2 159 000 B1**
(45) Veröffentlichungstag und Bekanntmachung des Hinweises auf die Patenterteilung: **23.09.2015**
(21) Anmeldenummer: 09010481.1
(22) Anmeldetag: 14.08.2009
(51) Int. Cl.: B24B 23/04, B23B 31/00, B24B 45/00

(54) **Adapter zum Befestigen eines Wekzeuges an einem Oszillationsantrieb**
Adapter for securing a tool to an oscillation drive
Adaptateur destiné à la fixation d'un outil sur un actionnement par oscillation

(30) Priorität: 29.08.2008 DE 202008011959 U
(43) Veröffentlichungstag der Anmeldung: 03.03.2010
(73) Patentinhaber: C. & E. Fein GmbH, 73529 Schwäbisch Gmünd-Bargau (DE)
(72) Erfinder: Grunikiewicz, Peter, 70569 Stuttgart (DE)
(74) Vertreter: Witte, Weller & Partner Patentanwälte mbB

(56) Entgegenhaltungen:
- EP-A- 1 213 107
- DE-A1-102004 050 798
- US-B2- 6 945 862

## Beschreibung

Die Erfindung betrifft einen Adapter zum Befestigen eines Werkzeuges an einem Oszillationsantrieb, der eine Antriebswelle aufweist, die um ihre Längsachse oszillierend antreibbar ist, wobei der Adapter eine der Antriebswelle zugewandte Antriebsseite und an dem Werkzeug zugewandte Werkzeugseite aufweist und von einer zentralen Öffnung durchsetzt ist, wobei der Adapter auf der Antriebsseite eine erste Aufnahme aufweist, die mindestens ein Formschlusselement zur formschlüssigen Verbindung mit dem Werkzeug aufweist, und wobei der Adapter auf seiner dem Werkzeug zugewandten Werkzeugseite eine zweite Aufnahme zur Verbindung mit dem Werkzeug aufweist, die eine von der Form der ersten Aufnahme abweichende Form aufweist.

Ein derartiger Adapter ist aus der US 6 ,945,862 B2 bekannt.

Der betreffende Adapter weist auf seiner Werkzeugseite eine Vertiefung mit einer Mehrzahl von nach außen vorlaufenden konvexen Vorsprüngen auf, die jeweils eine abgerundete Spitze aufweisen und über konkav gerundete Seitenflanken mit benachbarten Vorsprüngen verbunden sind. Auf seiner dem Oszillationsantrieb zugewandten Maschinenseite weist der Adapter eine Erhebung in Form eines regelmäßigen Vielecks auf, die auf eine Befestigungsöffnung eines aufzusetzenden Werkzeuges abgestimmt ist, um eine formschlüssige Verbindung zu ermöglichen.

Der Adapter ist dazu geeignet, um ein Werkzeug, das mit einer Befestigungsöffnung in Form eines regelmäßigen Vielecks ausgebildet ist, auf einer Antriebswelle eines Oszillationsantriebes mit einem Befestigungsabschnitt der vorstehend bezeichneten Art in Form einer Mehrzahl von nach außen verlaufenden konvexen Vorsprüngen, jeweils mit abgerundeter Spitze, aufzusetzen und zu befestigen.

In jüngster Zeit haben sich allerdings noch andere Formen des Befestigungsabschnitts einer Antriebswelle bzw. der zugeordneten Befestigungsöffnung eines Werkzeuges herausgebildet.

So ist aus der DE 10 2004 050 798 A1 ein Oszillationsantrieb bekannt, dessen Antriebswelle mit einer Mehrzahl von auf einem zur Mittelachse konzentrischen Kreis angeordneten Formschlussstücken mit trapezförmigem Querschnitt ausgebildet ist. Die betreffenden Werkzeuge, die auf diese Antriebswelle aufgesetzt werden können, weisen entsprechend geformte Ausstanzungen sowie eine mittige Öffnung auf, durch die hindurch eine Befestigungsschraube in die Antriebswelle des Oszillationsantriebes eingeschraubt werden kann. Mit den Formschlussstücken wird gleichzeitig eine formschlüssige Verbindung und eine Zentrierung des Werkzeuges an der Antriebswelle ermöglicht.

Die verschiedenen am Markt erhältlichen Systeme für die Form der Befestigungsöffnung und des zugeordnete Befestigungsabschnittes an der Antriebswelle führt dazu, dass die Teilevielfalt für derartige Verschleißteile deutlich erhöht wird, was zu erhöhten Kosten wegen unterschiedlicher Verpackungen, erhöhten Lagerhaltungskosten und einer geringeren Kostendegression bei Großserienfertigung führt.

Vor diesem Hintergrund besteht die Aufgabe der Erfindung darin, hier Abhilfe zu schaffen und einen Adapter bereitzustellen, der es ermöglicht, Werkzeuge mit Oszillationsantrieben zu verbinden, die eigentlich für andere Formen von Antriebswellen ausgebildet sind. Dabei sollte ein Benutzer in die Lage versetzt werden, Werkzeuge von unterschiedlichen Herstellern mit einem Oszillationsantrieb zu verwenden.

Diese Aufgabe wird erfindungsgemäß durch einen Adapter gemäß der Ansprüche 1 und 2 gelöst.

Die Aufgabe der Erfindung wird auf diese Weise vollkommen gelöst.

Durch die Bereitstellung des erfindungsgemäßen Adapters können nunmehr Werkzeuge, die zur Befestigung an einer Antriebswelle eines Oszillationsantriebes bestimmter Bauart ausgebildet sind und somit nicht auf andere Formen von Antriebswellen aufsetzbar sind, können nunmehr auch zusammen mit anderen Oszillationsantrieben mit anders geformter Antriebswelle verwendet werden.

Dies führt zu einer deutlichen Reduzierung der Teilevielfalt und einer damit verbundenen Kostendegression.

Gemäß einer weiteren Ausgestaltung der Erfindung ist die erste Aufnahme auf der Maschinenseite als Vertiefung ausgebildet und die zweite Aufnahme auf der Werkzeugseite des Adapters als Erhöhung ausgebildet.

Umgekehrt kann jedoch grundsätzlich auch die erste Aufnahme auf der Maschinenseite als Erhöhung ausgebildet sein und die zweite Aufnahme auf der Werkzeugseite des Adapters als Vertiefung.

Je nachdem ob am Werkzeug eine Befestigungsöffnung oder ein erhabener Befestigungsabschnitt zur Verbindung mit der Antriebswelle des Oszillationsantriebes vorgesehen ist, kann der Adapter für beide Fälle verwendet werden.

Die auf einem zur Mittelachse konzentrischen Kreis angeordneten Formschlussstücke sind gemäß einer weiteren Ausgestaltung der Erfindung trapezförmig ausgebildet, wie aus der DE 10 2004 050 798 A1 bekannt. Alternativ können sie jedoch auch rechteckförmig oder kreisförmig ausgebildet sein oder eine beliebige andere Form haben.

Gemäß einer weiteren Ausgestaltung der Erfindung liegen die abgerundeten Spitzen der nach außen vorlaufenden konvexen Vorsprünge und die inneren Enden der konkav gerundeten Seitenflanken jeweils auf einem zur Mittelachse konzentrischen Kreis, wie grundsätzlich aus der EP 1 213 107 A1, die die Grundlage für die Oberbegriff der Ansprüche 1 und 2 bildet, bekannt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: einen Querschnitt einer ersten Ausführung eines erfindungsgemäßen Adapters in vergrößerter Darstellung;
- Fig. 2: eine Aufsicht des Adapters gemäß Fig. 1 von der Werkzeugseite in verkleinerter Darstellung;
- Fig. 3: eine Untersicht des Adapters gemäß Fig. 2 von der Maschinenseite her;
- Fig. 4: einen vergrößerten Querschnitt durch eine weitere Ausführung eines erfindungsgemäßen Adapters;
- Fig. 5: eine Aufsicht des Adapters gemäß Fig. 4 in verkleinerter Darstellung von der Werkzeugseite her gesehen;
- Fig. 6: eine Untersicht des Adapters gemäß Fig. 5 von der Maschinenseite aus gesehen;
- Fig. 7: eine Untersicht einer nicht erfindungsgemäßen Ausführungsform eines Adapters von der Maschinenseite aus gesehen;
- Fig. 8: eine Aufsicht des Adapters gemäß Fig. 7 von der Werkzeugseite aus gesehen;
- Fig. 9: eine Aufsicht einer weiteren Ausführungsform des erfindungsgemäßen Adapters von der Werkzeugseite aus gesehen;
- Fig. 10: eine Untersicht des Adapters gemäß Fig. 9 von der Maschinenseite aus gesehen;
- Fig. 11: eine Aufsicht einer nicht erfindungsgemäßen Ausführungsform des Adapters von der Werkzeugseite aus gesehen und
- Fig. 12: eine Untersicht des Adapters gemäß Fig. 11 von der Maschinenseite aus gesehen;
- Fig. 13: eine schematische Darstellung eines herkömmlichen Oszillationsantriebes im Bereich seines Getriebekopfes von der Seite aus gesehen mit einem aufgesetzten Werkzeug unter Zwischenlage des erfindungsgemäßen Adapters und
- Fig. 14: eine Untersicht des Oszillationsantriebes gemäß Fig. 13.

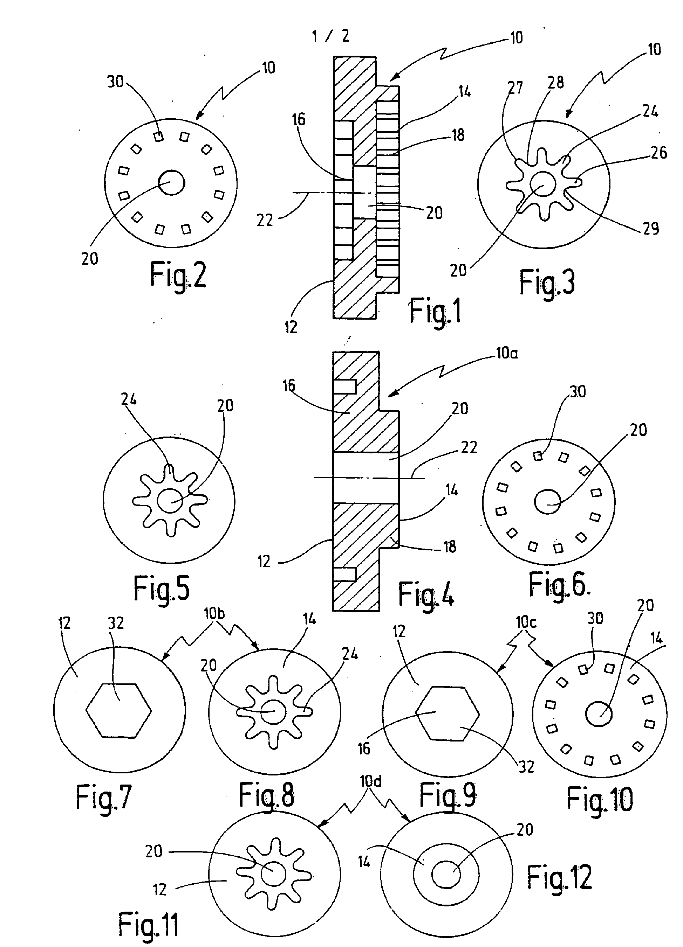

In Fig. 1 ist eine erste Ausführung eines erfindungsgemäßen Adapters insgesamt mit 10 bezeichnet. Fig. 1 zeigt den Adapter 10 im Querschnitt in vergrößerter Darstellung. Der Adapter 10 weist eine zylindrische Grundform in Form einer relativ flachen Scheibe mit einer Mittelachse 22 auf. Der Adapter ist von einer zylindrischen Öffnung 20 durchsetzt. Auf seiner dem Oszillationsantrieb zugewandten Maschinenseite 12 weist der Adapter 10 eine erste Aufnahme 16 auf, die als Vertiefung ausgebildet ist. Auf seiner gegenüberliegenden, dem Werkzeug zugewandten Werkzeugseite 14 weist der Adapter 10 eine zweite Aufnahme 18 auf, die erhaben nach außen hervorsteht, um ein Aufsetzen eines Werkzeuges mit entsprechend geformter Öffnung zu erlauben. Wie aus Fig. 3 ersichtlich, ist die Form der ersten Aufnahme 16 mit insgesamt acht nach außen vorlaufenden konvexen Vorsprüngen 26 ausgebildet, die jeweils eine abgerundete Spitze 27 aufweisen und die über konkav gerundete Seitenflanken 28 mit benachbarten Vorsprüngen 26 verbunden sind. Die ganze Anordnung ist symmetrisch zur Mittelachse 22 und entspricht der aus der US 6 945 862 B2, die hier vollständig durch Bezugnahme eingeschlossen wird, bekannten Form (vgl. Fig. 4). Die zweite Aufnahme 18 auf der Werkzeugseite 14 ist gemäß der DE 10 2004 050 798 A1, die hier gleichfalls vollständig durch Bezugnahme eingeschlossen wird, bekannten Form. Es sind insgesamt zwölf stiftförmig nach außen hervorstehende Formschlusselemente 30 mit einem beispielsweise trapezförmigen oder runden Querschnitt vorgesehen, die gleichmäßig über einen zur Mittelachse 22 konzentrischen Kreis angeordnet sind.

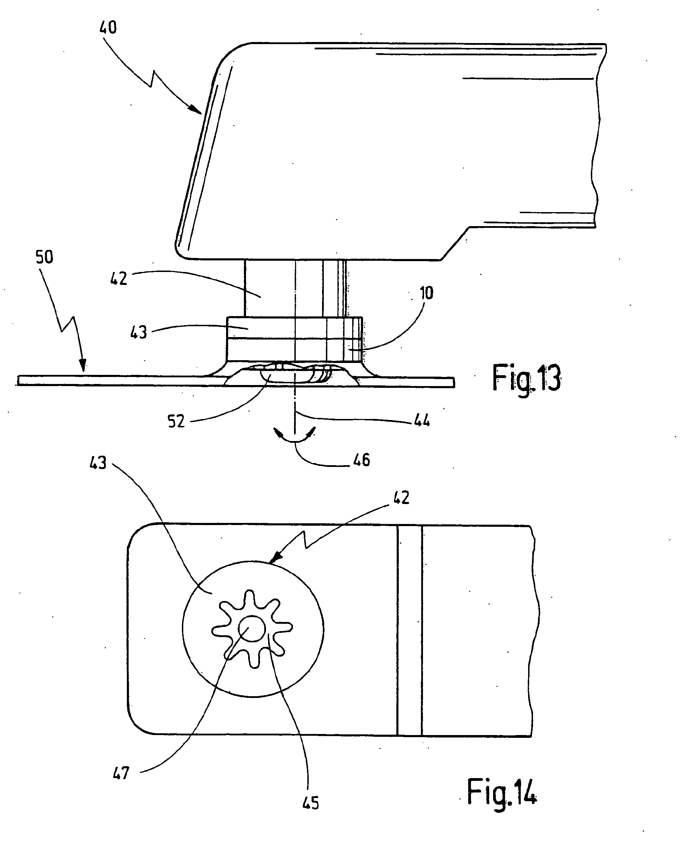

Der Adapter erlaubt somit die Befestigung eines Werkzeuges, das mit entsprechend geformten Ausnehmungen für die Formschlussstücke 30 gemäß Fig. 2 versehen ist, auf einem Oszillationsantrieb 40 gemäß Fig. 13, dessen Antriebswelle 42 mit einem Flansch 43 und einem davon erhaben nach außen hervorstehenden Formschlussgegenelement 45 gemäß Fig. 14 versehen ist, die der Form gemäß Fig. 3 entspricht.

Unter Fig. 13 und 14 ist eine beispielhafte Ausführung eines Werkzeuges bekannter Bauart dargestellt, bei dem die um ihre Längsachse 44 oszillierend antreibbare Antriebswelle 42 mit hoher Frequenz von z.B. 5000 bis 25.000 Oszillationen pro Minute und geringem Verschwenkwinkel von z.B. 0,5 bis 5° oszillierend angetrieben werden kann, wie durch den Doppelpfeil 46 angedeutet ist. Die Antriebswelle 42 weist einen Flansch 43 auf, an dem ein erhaben hervorstehender Befestigungsabschnitt mit einem Formschlussgegenelement 45 der Form gemäß Fig. 3 vorgesehen ist. Auf eine derartige Antriebswelle 42 können Werkzeuge, die mit einer Befestigungsöffnung mit entsprechend ausgebildeter Form ausgebildet sind, unmittelbar aufgesetzt werden. Sollen auf einer solchen Antriebswelle 42 jedoch Werkzeuge befestigt werden, die eine Befestigungsöffnung mit einer abweichenden Form aufweisen, so wird hierzu der erfindungsgemäße Adapter verwendet. Gemäß Fig. 13 ist ein erfindungsgemäßer Adapter gemäß der Fig. 1 bis 3 auf die Antriebswelle 42 aufgesetzt, so dass sich ein Formschluss mit dem Formschlussgegenelement 45 ergibt. Auf die Werkzeugseite 14 des Adapters 10 kann dann gemäß Fig. 13 ein Werkzeug 50 aufgesetzt werden, das mit einer Befestigungsöffnung versehen ist, die der in Fig. 2 gezeigten Form entspricht. Das bedeutet, dass das Werkzeug 50 insgesamt zwölf trapezförmige Ausnehmungen aufweist, die auf einer Kreislinie liegen, so dass sich eine auf die Form gemäß abgestimmte Aufnahme ergibt. Zur Befestigung dient nun eine Gewindeschraube 52, die durch die zentrale Öffnung 20 des Adapters 10 in ein Gewindesackloch 47 der Antriebswelle 42 eingeschraubt wird. Dabei ergibt sich vorzugsweise eine versenkte Lage des Schraubenkopfes der Schraube 52, so dass auf der Oberfläche des Werkzeuges 50 beispielsweise ein Schleifpapier mittels eines Klettverschlusses befestigt werden kann. Bei dem Werkzeug 50 kann es sich beispielsweise um eine Dreiecksform mit abgerundeten Ecken und konvex gerundeten Seitenkanten aufweisen. Jedoch kann es sich auch um ein beliebig anders geformtes Werkzeug, ein Messer, einen Spatel usw. handeln.

Einige weitere Varianten des erfindungsgemäßen Adapters sind in den Fig. 4 bis 12 dargestellt und werden im Folgenden kurz beschrieben.

Die Fig. 4 bis 6 zeigen einen Adapter 10a, bei dem gegenüber dem zuvor anhand der Fig. 1 bis 3 beschriebenen Adapter die Seiten vertauscht wurden. Dies bedeutet, dass die erste Aufnahme 16 auf der Werkzeugseite nunmehr als Ausnehmung ausgebildet ist und dazu geeignet ist, auf eine Antriebswelle der aus der DE 10 2004 050 798 A1 bekannten Bauart aufgesetzt zu werden. Die zweite Aufnahme 18 auf der Werkzeugseite des Adapters 10a ist derart ausgestaltet, dass hierauf Werkzeuge aufgesetzt werden können, deren Befestigungsöffnung der Form gemäß Fig. 3 aufgesetzt werden können.

Gemäß den Fig. 7 und 8 ist ein nicht erfindungsgemäßen Adapter 10b zu sehen, bei dem auf der Maschinenseite 12 die erste Aufnahme in Form eines Sechskants 32 ausgebildet ist und auf der Werkzeugseite 14 wiederum ein erhabener vorstehender Befestigungsabschnitt der aus Fig. 3 bekannten Form vorgesehen ist.

Gemäß der Fig. 9 und 10 ist ein weiterer Adapter 10c dargestellt, bei dem auf der Werkzeugseite 12 eine sechseckförmige Aufnahme 16 vorgesehen ist, während auf der Maschinenseite 14 zwölf Formschlussstücke 30 der aus Fig. 2 bekannten Form und Anordnung vorgesehen sind.

Eine weitere Variation des nicht erfindungsgemäßen Adapters ist in den Fig. 11 und 12 dargestellt und insgesamt mit 10d bezeichnet. Hierbei ist auf der Maschinenseite 12 eine erste als Vertiefung vorgesehene Aufnahme gemäß Fig. 3 ausgebildet, während auf der gegenüberliegenden Gegenseite lediglich eine runde Aufnahme 14 vorgesehen ist.

Ein derartiger Adapter 10d wird dann verwendet, wenn ein Werkzeug verwendet werden soll, das lediglich mit einer kraftschlüssigen Verbindung gewünscht ist, ohne einen Formschluss. Zur Befestigung dient wiederum eine Befestigungsschraube, die durch den Adapter 10d und das Werkzeug hindurch in das Sacklochgewinde des Oszillationsantriebes 40 eingeschraubt wird.

## Patentansprüche

1. Adapter zum Befestigen eines Werkzeuges (50) an einem Oszillationsantrieb (40), der eine Antriebswelle (42) aufweist, die um ihre Längsachse (46) oszillierend antreibbar ist, wobei der Adapter (10; 10a; 10b; 10c; 10d) eine der Antriebswelle (42) zugewandte Antriebsseite (12) und eine dem Werkzeug (50) zugewandte Werkzeugseite (14) aufweist und von einer zentralen Öffnung (20) durchsetzt ist, wobei der Adapter (10; 10a; 10b; 10c; 10d) auf der Antriebsseite (12) eine erste Aufnahme aufweist, die mindestens ein Formschlusselement zur formschlüssigen Verbindung mit dem Werkzeug (50) aufweist, und wobei der Adapter (10; 10a; 10b, 10c; 10d) auf der Werkzeugseite (14) eine zweite Aufnahme (18) zur Verbindung mit dem Werkzeug (50) aufweist, die eine von der Form der ersten Aufnahme (16) abweichende Form aufweist und die eine Mehrzahl von nach außen vorlaufenden konvexen Vorsprüngen (26) aufweisen, die jeweils eine abgerundete Spitze (27) aufweisen und über konkav gerundete Seitenflanken (28) mit benachbarten Vorsprüngen (26) verbunden sind, **dadurch gekennzeichnet daß** das mindestens eine Formschlusselement eine Mehrzahl von gleichmäßig auf einem zur Mittelachse (22) konzentrischen Kreis angeordneten stiftförmig nach außen hervorstehenden Formschlussstücken (30) aufweist, die zur formschlüssigen Verbindung mit zugeordneten Formschlussgegenelementen an der Antriebswelle (42) ausgebildet sind.

2. Adapter zum Befestigen eines Werkzeuges (50) an einem Oszillationsantrieb (40), der eine Antriebswelle (42) aufweist, die um ihre Längsachse (46) oszillierend antreibbar ist, wobei der Adapter (10; 10a; 10b; 10c; 10d) eine der Antriebswelle (42) zugewandte Antriebsseite (12) und eine dem Werkzeug (50) zugewandte Werkzeugseite (14) aufweist und von einer zentralen Öffnung (20) durchsetzt ist, wobei der Adapter (10; 10a; 10b; 10c; 10d) auf der Antriebsseite (12) eine erste Aufnahme aufweist, die mindestens ein Formschlusselement zur formschlüssigen Verbindung mit dem Werkzeug (50) aufweist, wobei das mindestens eine Formschlusselement eine Mehrzahl von nach außen vorlaufenden konvexen Vorsprüngen (26), die jeweils eine abgerundete Spitze (27) aufweisen und über konkav gerundete Seitenflanken (28) mit benachbarten Vorsprüngen (26) verbunden sind, aufweist, und wobei der Adapter (10; 10a; 10b, 10c; 10d) auf der Werkzeugseite (14) eine zweite Aufnahme (18) zur Verbindung mit dem Werkzeug (50) aufweist, die eine von der Form der ersten Aufnahme (16) abweichende Form aufweist, **dadurch gekennzeichnet daß** die zweite Aufnahme (18) durch eine Mehrzahl von gleichmäßig auf einem zur Mittelachse (22) konzentrischen Kreis angeordneten stiftförmig nach außen hervorstehenden Formschlussstücken (30) gebildet ist.

3. Adapter nach Anspruch 1 oder 2, bei dem die erste Aufnahme auf der Maschinenseite (12) als Vertiefung ausgebildet ist und die zweite Aufnahme auf der Werkzeugseite (14) des Adapters als Erhöhung ausgebildet ist.

4. Adapter nach einem der vorhergehenden Ansprüche, bei dem die auf einem zur Mittelachse (22) konzentrischen Kreis angeordneten Formschlussstücke (30) trapezförmig, rechteckförmig oder kreisförmig ausgebildet sind.

5. Adapter nach einem der vorhergehenden Ansprüche, bei dem die abgerundeten Spitzen (27) der nach außen vorlaufenden konvexen Vorsprünge (26) und die inneren Enden der konkav gerundeten Seitenflanken (28) jeweils auf einem zur Mittelachse (22) konzentrischen Kreis liegen.

6. Adapter nach einem der vorhergehenden Ansprüche, bei dem die zweite Aufnahme (18) auf der Werkzeugseite zur formschlüssigen Verbindung mit dem Werkzeug (50) ausgebildet ist.

## Claims

1. An adapter for mounting a tool (50) on an oscillating drive (40) having a drive shaft (42) configured to be oscillatingly driven about its longitudinal axis (46), wherein the adapter (10; 10a; 10b; 10c; 10d) comprises a drive end (12) facing the drive shaft (42) and a tool end (14) facing the tool (50) and is passed by a central opening (20), wherein the adapter (10; 10a; 10b; 10c; 10d) has a first receptacle on the drive end (12) which comprises at least one positive-locking element for positive connection with the tool (50), and wherein the adapter (10; 10a; 10b; 10c; 10d) comprises a second receptacle (18) on its tool end (14) for effecting connection with a tool (50), which receptacle has a shape different from the first receptacle (16) and comprises a plurality of outwardly extending convex projections (26), each having a rounded tip (27) and being connected with neighboring projections (26) via rounded concave lateral flanks (28), **characterized in that** the at least one positive-locking element comprises a plurality of positive-locking pieces (30) arranged evenly on a circle concentric to the center axis (22) and protruding to the outside, being configured for positive-locking connection with matching positive-locking counter-elements on the drive shaft (42).

2. An adapter for mounting a tool (50) on an oscillating drive (40) having a drive shaft (42) configured to be oscillatingly driven about its longitudinal axis (46), wherein the adapter (10; 10a; 10b; 10c; 10d) comprises a drive end (12) facing the drive shaft (42) and a tool end (14) facing the tool (50) and is passed by a central opening (20), wherein the adapter (10; 10a; 10b; 10c; 10d) has a first receptacle on the drive end (12) which comprises at least one positive-locking element for positive connection with the tool (50), wherein the at least one positive-locking element comprises a plurality of outwardly extending convex projections (26), each having a rounded tip (27) and being connected with neighboring projections (26) via rounded concave lateral flanks (28), and wherein the adapter (10; 10a; 10b; 10c; 10d) comprises a second receptacle (18) on its tool end (14) for effecting connection with a tool (50), which receptacle has a shape different from the first receptacle (16), **characterized in that** the second receptacle (18) is formed by a plurality of positive-locking pieces (30) arranged evenly on a circle concentric to the center axis (22).

3. The adapter of claim 1 or 2, wherein the first receptacle on the machine end (12) is configured as a recess while the second receptacle on the tool end (14) of the adapter is configured as a raised portion.

4. The adapter of any of the preceding claims, wherein the positive-locking elements (30) arranged on a circle concentric to the center axis (22) have a trapezoidal, rectangular or circular shape.

5. The adapter of any of the preceding claims, wherein the rounded tips (27) of the outwardly extending convex projections (26) and the inner ends of the rounded concave lateral flanks (28) each lie on a circle concentric to the center axis (22).

6. The adapter of any of the preceding claims, wherein the second receptacle (18) is provided on the tool end for positive-locking connection with the tool (50).

## Revendications

1. Adaptateur destiné à la fixation d'un outil (50) sur un entraînement oscillant (40), lequel comprend un arbre d'entraînement (42) qui peut être entraîné de manière oscillante autour de son axe longitudinal (46), l'adaptateur (10 ; 10a ; 10b ; 10c ; 10d) comprenant un côté entraînement (12) tourné vers l'arbre d'entraînement (42) et un côté outil (14) tourné vers l'outil (50) et étant traversé par une ouverture centrale (20), l'adaptateur (10 ; 10a ; 10b ; 10c ; 10d) comprenant un premier logement sur le côté entraînement (12), lequel premier logement comprend au moins un élément d'engagement par complémentarité de formes pour la liaison par engagement par complémentarité de formes à l'outil (50), et l'adaptateur (10 ; 10a ; 10b ; 10c ; 10d) comprenant un deuxième logement (18) sur le côté outil (14) pour la liaison à l'outil (50), lequel deuxième logement présente une forme différente de la forme du premier logement (16) et comprend une pluralité de saillies convexes (26) situées à l'avant vers l'extérieur, lesquelles comprennent respectivement une pointe arrondie (27) et sont reliées à des saillies adjacentes (26) par le biais de flancs latéraux (28) arrondis de manière concave, **caractérisé en ce que** l'au moins un élément d'engagement par complémentarité de formes comprend une pluralité de pièces d'engagement par complémentarité de formes (30) faisant saillie vers l'extérieur en forme de goupilles et disposées régulièrement sur un cercle concentrique à l'axe médian (22), lesquelles pièces d'engagement par complémentarité de formes sont réalisées pour la liaison par engagement par complémentarité de formes à des éléments conjugués associés d'engagement par complémentarité de formes sur l'arbre d'entraînement (42).

2. Adaptateur destiné à la fixation d'un outil (50) sur un entraînement oscillant (40), lequel comprend un arbre d'entraînement (42) qui peut être entraîné de manière oscillante autour de son axe longitudinal (46), l'adaptateur (10 ; 10a ; 10b ; 10c ; 10d) comprenant un côté entraînement (12) tourné vers l'arbre d'entraînement (42) et un côté outil (14) tourné vers l'outil (50) et étant traversé par une ouverture centrale (20), l'adaptateur (10 ; 10a ; 10b ; 10c ; 10d) comprenant un premier logement sur le côté entraînement (12), lequel premier logement comprend au moins un élément d'engagement par complémentarité de formes pour la liaison par engagement par complémentarité de formes à l'outil (50), l'au moins un élément d'engagement par complémentarité de formes comprenant une pluralité de saillies convexes (26) situées à l'avant vers l'extérieur, lesquelles comprennent respectivement une pointe arrondie (27) et sont reliées à des saillies adjacentes (26) par le biais de flancs latéraux (28) arrondis de manière concave, et l'adaptateur (10 ; 10a ; 10b ; 10c ; 10d) comprenant un deuxième logement (18) sur le côté outil (14) pour la liaison à l'outil (50), lequel deuxième logement présente une forme différente de la forme du premier logement (16), **caractérisé en ce que** le deuxième logement (18) est formé par une pluralité de pièces d'engagement par complémentarité de formes (30) faisant saillie vers l'extérieur en forme de goupilles et disposées régulièrement sur un cercle concentrique à l'axe médian (22).

3. Adaptateur selon la revendication 1 ou 2, dans lequel le premier logement est réalisé en tant que renfoncement sur le côté machine (12) et le deuxième logement est réalisé en tant que relief sur le côté outil (14) de l'adaptateur.

4. Adaptateur selon l'une quelconque des revendications précédentes, dans lequel les pièces d'engagement par complémentarité de formes (30) disposées sur un cercle concentrique à l'axe médian (22) sont réalisées de manière trapézoïdale, rectangulaire ou circulaire.

5. Adaptateur selon l'une quelconque des revendications précédentes, dans lequel les pointes arrondies (27) des saillies convexes (26) situées à l'avant vers l'extérieur et les extrémités intérieures des flancs latéraux (28) arrondis de manière concave sont situées respectivement sur un cercle concentrique à l'axe médian (22).

6. Adaptateur selon l'une quelconque des revendications précédentes, dans lequel le deuxième logement (18) est réalisé côté outil pour la liaison par engagement par complémentarité de formes à l'outil (50).
